# FASCICULE DE BREVET EUROPEEN

(11) **EP 3 685 498 B1**
(45) Date de publication et mention de la délivrance du brevet: **28.07.2021**
(21) Numéro de dépôt: 18762824.3
(22) Date de dépôt: 30.08.2018
(51) Int. Cl.: H02K 21/14, H02K 29/03, H02K 1/27, H02K 1/24

(54) **GEOMETRIE DE PONTS MAGNETIQUES D'UN ROTOR DE MACHINE ELECTRIQUE**
GEOMETRIE VON MAGNETBRÜCKEN EINES ELEKTRISCHEN MASCHINENROTORS
GEOMETRY OF MAGNETIC BRIDGES OF AN ELECTRICAL MACHINE ROTOR

(30) Priorité: 18.09.2017 FR 1758621
(43) Date de publication de la demande: 29.07.2020
(73) Titulaire: Mavel EDT S.p.A., 11026 Pont-Saint-Martin (AO) (IT)
(72) Inventeur: FAVRE, Luca, 11010 Valpelline (AO) (IT); BOISSON, Julien, 92500 RUEIL-MALMAISON (FR); GAUSSENS, Benjamin, 78530 BUC (FR); BETTONI, Davide, Settimo Vittone To Italy (IT); DIB, Wissam, 92150 SURESNES (FR); ABDELLI, Abdenour, 78380 BOUGIVAL (FR)
(74) Mandataire: Leoncini, Alberto
(86) Numéro de dépôt international: PCT/EP2018/073348
(87) Numéro de publication internationale: WO 2019/052828

(56) Documents cités:
- WO-A1-2013/133474
- WO-A1-2016/198468
- DE-A1-102016 208 042
- US-A1- 2013 270 957
- SHOHEI OOI ET AL: "Performance evaluation of a high power density PMASynRM with ferrite magnets", ENERGY CONVERSION CONGRESS AND EXPOSITION (ECCE), 2011 IEEE, IEEE, 17 septembre 2011 (2011-09-17), pages 4195-4200, XP032067733, DOI: 10.1109/ECCE.2011.6064341 ISBN: 978-1-4577-0542-7

## Description

La présente invention se rapporte à une machine électrique tournante synchrone à réluctance variable assistée d'aimants permanents et plus particulièrement à un rotor d'une telle machine qui fonctionne avec un bus continu haute tension qui permet une forte puissance.

Généralement, une telle machine électrique comporte un stator et un rotor disposés coaxialement l'un dans l'autre.

Le rotor est formé d'un corps de rotor avec un empilage de tôles placé sur un arbre de rotor. Ces tôles comprennent des logements pour des aimants permanents et des perforations pour créer des barrières de flux permettant de diriger radialement le flux magnétique des aimants vers le stator et pour favoriser la création d'un couple reluctant.

Ce rotor est généralement logé à l'intérieur d'un stator qui porte des bobinages électriques permettant de générer un champ magnétique permettant d'entraîner en rotation le rotor.

Comme cela est mieux décrit dans le document WO2016188764, le rotor comprend une pluralité d'évidements axiaux qui traversent les tôles de part en part.

Une première série d'évidements axiaux, disposés radialement les uns au-dessus des autres et à distance les uns des autres, forment des logements pour des générateurs de flux magnétiques, ici des aimants permanents sous forme de barreau rectangulaire.

L'autre série d'évidements consiste en des perforations de direction radiale inclinée, qui partent de ces logements pour arriver au voisinage du bord des tôles.

Les perforations inclinées sont disposées symétriquement par rapport aux logements des aimants de manière à former à chaque fois une figure géométrique sensiblement en forme de V à fond aplati avec le fond plat formé par le logement des aimants et avec les bras inclinés de ce V formés par les perforations. Il se crée ainsi des barrières de flux formées par les perforations. Le flux magnétique provenant des aimants ne peut alors que transiter par les parties pleines entre les perforations. Ces parties pleines sont constituées d'un matériau ferromagnétique.

Le document WO2016198468 décrit un moteur d'entraînement électrique pour un véhicule. Le moteur d'entraînement électrique a un stator ayant une pluralité de fentes, et un rotor ayant une pluralité de pôles, Les pôles ont chacun au moins un premier aimant permanent centré sur un axe du pôle et une pluralité de barrières de flux pour interrompre au moins un harmonique de couple d'ordre n du moteur d'entraînement électrique. Proximale d'une surface extérieure du rotor, une première période angulaire entre la première et la secondaire barrières de flux est définie par l'équation (xi1 = tao / n1), où: (xi1) est la première période angulaire, (tao) est le pas polaire, et n1 est un numéro d'ordre d'un harmonique de couple à interrompre.

Cependant il a été constaté que les harmoniques de force contre-électromotrice et l'ondulation du couple sont importantes dans ce type de machine synchrone à réluctance assistée d'aimants permanents.

Ceci peut générer des à-coups et des vibrations au niveau du rotor en entraînant un inconfort d'utilisation de cette machine. La présente invention vise à remédier aux inconvénients énumérés ci-dessus et notamment à réduire l'ondulation du couple, les harmoniques de force contre-électromotrice et le bruit acoustique.

Ainsi, pour atteindre au moins l'un des objectifs susvisés, parmi d'autres, la présente invention propose, selon un premier aspect, un rotor pour machine électrique, le rotor comprend :
- un corps de rotor, formé par un empilage de tôles, placé sur un arbre de rotor et
- huit pôles magnétiques, chaque pôle magnétique est composé d'au moins trois aimants positionnés dans des évidements axiaux et
- trois barrières de flux asymétriques qui composent chaque pôle magnétique dont une barrière de flux externe, une barrière de flux centrale et une barrière de flux interne, chaque barrière de flux comprend deux évidements inclinés, positionnés de part et d'autre de chaque évidement axial, qui forment entre eux un angle d'ouverture (θ1, θ2, θ3) qui correspond à l'angle entre deux droites passant chacune par le centre du rotor et par un point milieu positionné au niveau d'une face radialement externe des évidements inclinés respectifs de chaque barrière de flux
   caractérisé en ce que les huit pôles magnétiques sont divisés en quatre pôles magnétiques primaires et quatre pôles magnétiques secondaires et
- les quatre pôles magnétiques primaires sont composés chacun d'une barrière de flux externe comprenant un angle d'ouverture θ1 sensiblement égal à 43,1°, d'une barrière de flux centrale comprenant un angle d'ouverture θ2 sensiblement égal à 33,1° et une barrière de flux interne comprenant un angle d'ouverture θ3 sensiblement égal à 23,1° et
- les quatre pôles magnétiques secondaires sont composés chacun d'une barrière de flux externe comprenant un angle d'ouverture θ1 sensiblement égal à 34,4°, d'une barrière de flux centrale comprenant un angle d'ouverture θ2 sensiblement égal à 24,4° et une barrière de flux interne comprenant un angle d'ouverture θ3 sensiblement égal à 14,4° et
- chaque pôle secondaire est alterné avec un pôle primaire et
- une différence entre les angles d'ouverture de chaque barrière de flux respective d'un pôle magnétique primaire à un pôle magnétique secondaire est égale à 8,7°.

L'invention concerne également une machine électrique qui comprend un stator et un rotor tel que décrit précédemment et dans laquelle le rotor est logé à l'intérieur dudit stator.

Selon un mode de réalisation de l'invention, le stator comprend une multiplicité d'encoches radiales disposées circonférentiellement le long dudit stator.

Selon un mode de réalisation de l'invention, les encoches s'étendent axialement le long du stator.

Selon un mode de réalisation de l'invention, le stator a un diamètre extérieur compris entre 100 et 300 mm et est de préférence de 200 mm et a un diamètre intérieur compris entre 100 et 200 mm et est de préférence de 135 mm.

Selon un mode de réalisation de l'invention, la machine électrique comprend un entrefer dont la longueur est comprise entre 0.4 mm et 0.8 mm et est de préférence égale à 0.6 mm.

D'autres caractéristiques et avantages de l'invention, apparaîtront à la lecture de la description ci-après d'un exemple non limitatif de réalisation, en se référant aux figures annexées et décrites ci-après.

### Présentation succincte des figures

La figure 1 illustre un rotor conforme à l'invention ;
La figure 2 illustre une machine électrique conforme à l'invention ;
La figure 3 est un graphique des performances de la machine électrique conforme à l'invention ;
La figure 4 est un graphique des amplitudes des harmoniques d'une machine électrique conforme à l'invention et d'une machine électrique de l'état de l'art.

### Description détaillée de l'invention

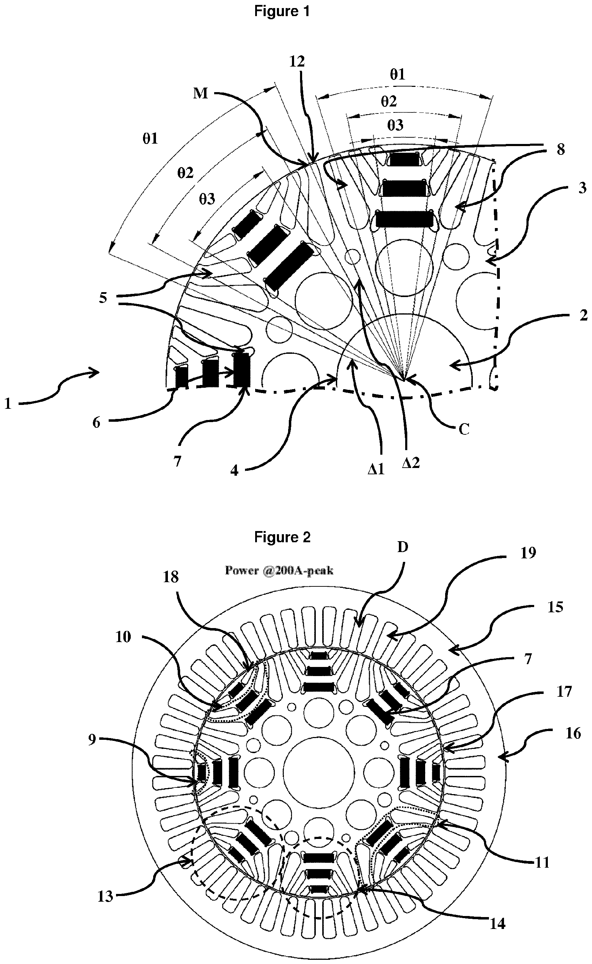

Comme illustré sur la figure 1, un rotor 1 comporte de manière connue en soi, un arbre 2, de préférence magnétique, sur lequel est placé un empilage de tôles 3. Dans le cadre de l'invention ces tôles 3 sont ferromagnétiques planes, identiques, laminées et de forme circulaire et sont assemblées les unes aux autres par tous moyens connus. Les tôles 3 comprennent un alésage central 4 traversé par l'arbre 2 de rotor et une pluralité d'évidements axiaux 5 qui traversent les tôles 3 de part en part.

Une première série d'évidements axiaux 6, disposés radialement les uns au-dessus des autres et à distance les uns des autres, forment des logements pour des générateurs de flux magnétiques, ici des aimants permanents 7 sous forme de barreau. Les évidements axiaux 6 forment des trapèzes. Cependant les évidements axiaux 6 peuvent prendre d'autres formes notamment des formes rectangulaires, carrées.

L'autre série d'évidements consiste en des perforations de direction radiale inclinée 8, qui partent des évidements axiaux 6 pour arriver au voisinage du bord des tôles 3, c'est-à-dire au niveau d'un entrefer de la machine électrique.

Dans le cadre de l'invention, le rotor 1 comprend huit pôles magnétiques comme visibles à la figure 2. Chaque pôle magnétique est composé de trois aimants permanents 7 positionnés dans les trois évidements axiaux 6 prévus pour loger les aimants permanents 7. Le rotor 1 est également composé de trois barrières de flux dont une barrière de flux externe 9, une barrière de flux milieu 10 et une barrière de flux interne 11.

Tel que cela est visible sur les figures 1 et 2, chaque barrière de flux (9, 10, 11) comprend deux perforations inclinées qui sont disposées symétriquement par rapport aux logements des aimants 7 pour chaque pôle magnétique. Ainsi, il se forme à chaque fois une figure géométrique sensiblement en forme de V à fond aplati avec le fond plat formé par le logement 7 et avec les bras inclinés de ce V formés par les perforations inclinées. Pour chaque barrière de flux (9, 10, 11) de chaque pôle magnétique va correspondre un angle d'ouverture (θ1, θ2, θ3) qui va qualifier l'ouverture de la forme en V. Ces angles d'ouverture correspondent à l'angle entre deux droites (Δ1, Δ2) passant chacune par un centre C du rotor 1 et par un point milieu M positionné au niveau d'une face externe 12 des perforations de direction radiale inclinée 8 de chaque barrière de flux. Cette face externe 12 se situe au niveau d'un entrefer mécanique de la machine comme cela sera vu par la suite.

Dans le cadre de l'invention, le rotor 1 comprend deux architectures de pôles magnétiques. A cet effet, il comprend quatre pôles magnétiques primaires 13 et quatre pôles magnétiques secondaires 14.

Selon l'invention, les pôles magnétiques primaires 13 sont composés chacun d'une barrière de flux externe 9 qui comprend un angle d'ouverture θ1 sensiblement égal à 43,1°, d'une barrière de flux centrale 10 comprenant un angle d'ouverture θ2 sensiblement égal à 33,1° et une barrière de flux interne 11 comprenant un angle d'ouverture θ3 sensiblement égal à 23,1°. Les quatre pôles magnétiques secondaires 14 sont composés quant à eux chacun d'une barrière de flux externe 9 comprenant un angle d'ouverture θ1 sensiblement égal à 34,4°, d'une barrière de flux centrale 10 comprenant un angle d'ouverture θ2 sensiblement égal à 24,4° et une barrière de flux interne 11 comprenant un angle d'ouverture θ3 sensiblement égal à 14,4°. On entend par « sensiblement égal » pour les angles, le fait que ceux-ci peuvent varier de un ou deux degrés mais sont préférentiellement donnés par les valeurs mentionnées ci-dessus.

Un aspect majeur de l'invention est que le rotor 1 comprend une alternance entre les pôles magnétiques primaires 13 et les pôles magnétiques secondaires 14. De cette manière l'ondulation du couple, les harmoniques de force contre-électromotrice et le bruit acoustique sont fortement réduits par rapport au machine électrique de l'art antérieur. Dans le mode de réalisation de la machine électrique, la différence entre les angles d'ouverture pour chaque barrière de flux spécifique est constante pour chaque paire de pôles primaire et secondaire alternée. Cette différence angulaire est sensiblement égale à 8,7°. Cette différence angulaire de 8,7° se retrouve pour les barrières de flux externe, centrale et interne pour chaque pôle primaire 13 et secondaire 14 qui se suivent. Par exemple, la différence angulaire entre les angles d'ouverture θ1 des barrières de flux externe 9 d'un pôle magnétique primaire 13 et d'un pôle magnétique secondaire 14 est égale à 43,1° moins 34,4° soit 8,7°. Il va en de même pour les angles d'ouverture des autres barrières de flux.

Il se crée ainsi des barrières de flux asymétriques entre deux pôles consécutifs. Le flux magnétique provenant des aimants ne peut alors que transiter par les parties pleines entre les perforations et permet de réduire l'ondulation du couple, les harmoniques de force contre-électromotrice et le bruit acoustique.

Dans le mode de réalisation décrit, le rotor 1 a une longueur de 150 mm, et les tôles 3 constitutives du rotor 1 sont laminées à 0.35 mm. Toutefois ces valeurs ne sont nullement limitatives et on peut avoir tous les spectres de distances qui satisfassent aux valeurs d'angles énoncées ci-dessus.

Comme visible sur la figure 2, qui illustre une machine électrique tournante conforme à un mode de réalisation de l'invention (ici une machine synchrone à réluctance variable assistée d'aimant permanent), la machine électrique comprend également un stator 15 imbriqué dans le rotor 1 de manière coaxiale.

Le stator 15 comprend une bague annulaire 16 avec une paroi interne 17 dont le diamètre intérieur est prévu pour recevoir le rotor 1 avec un espace nécessaire pour réaliser un entrefer 18. Cette bague comprend une multiplicité de perçages, ici de section oblongue, qui forment des encoches 19 pour les bobinages d'induit.

Plus précisément, ces perçages s'étendent axialement tout au long du stator en étant disposés radialement sur la bague tout en étant placés circonférentiellement à distance les uns des autres d'une distance D. Dans le cadre de l'invention il y a 48 perçages.

Dans le cadre de l'invention, le stator a un diamètre extérieur de 200 mm et un diamètre intérieur de 135 mm. La longueur de l'entrefer 18 de la machine électrique est de 0.6 mm.

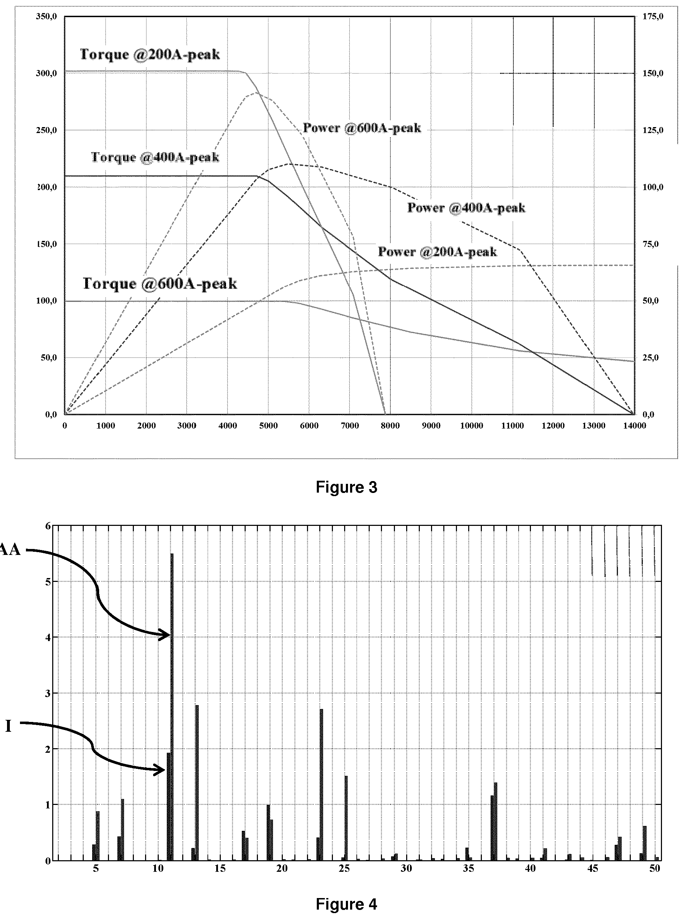

La figure 3 représente les performances électromagnétiques de la machine électrique dans une application où la tension du bus DC (courant discontinu) est de 350 V, le point continu se situe à un pic de 400 A, le point « peak » se situe à une valeur de 600 A et la vitesse maximale est de 16 800 rpm (14 000 rpm + 20% de survitesse). En abscisse on a représenté la vitesse de la machine électrique en tours par minutes et en ordonnée le couple en N.m pour les courbes continues et la puissance en kW (échelle à droite) pour les courbes en pointillés.

La figure 4, qui est un diagramme comparatif entre une machine électrique de l'art antérieur (AA) décrit dans le document WO2016188764 et une machine électrique conforme à l'invention (I), illustre les différences d'amplitudes des harmoniques par rapport au fondamental et confirme le résultat attendu qui est la réduction des ondulations du couple et des harmoniques de force contre-électromotrice dûe à l'alternance des pôles magnétiques primaires 13 et secondaires 14. Le diagramme représente en abscisse le rang électrique des harmonique et en ordonnée la force contre électromotrice dans le cas des deux machines électrique (AA et 1).

Le tableau suivant présente dans la colonne de droite les ondulations de couple et résume ainsi les gains obtenus grâce à l'architecture nouvelle de l'invention pour des valeurs de 210, 260 et 302 N.m:

| 400 A- - 210 N.m (0.53 N.m/A) | |
|---|---|
| machine électrique art antérieur | 9,8% |
| machine électrique conforme à l'invention | 8.8% |

| 500 A- - 260 N.m (0.52 N.m/A) | |
|---|---|
| machine électrique art antérieur | 15.0% |
| machine électrique conforme à l'invention | 8.9% |

| 600 A- - 302 N.m (0.50 N.m/A) | |
|---|---|
| machine électrique art antérieur | 18.7% |
| machine électrique conforme à l'invention | 8.6% |

On remarque aisément une diminution des ondulations de couple par rapport à l'état de l'art.

## Revendications

1. Rotor (1) pour machine électrique, le rotor (1) comprend :
- un corps de rotor (1), formé par un empilage de tôles (3), placé sur un arbre de rotor (1) et
- huit pôles magnétiques, chaque pôle magnétique est composé d'au moins trois aimants (7) positionnés dans des évidements axiaux (6) et
- trois barrières de flux asymétriques qui composent chaque pôle magnétique dont une barrière de flux externe (9), une barrière de flux centrale (10) et une barrière de flux interne (11), chaque barrière de flux (9, 10, 11) comprend deux évidements inclinés (8) positionnés de part et d'autre de chaque évidement axial (6), les deux évidements inclinés (8) forment entre eux un angle d'ouverture (θ1, θ2, θ3) qui correspond à l'angle entre deux droites (Δ1, Δ2) passant chacune par le centre C du rotor (1) et par un point milieu (M) positionné au niveau d'une face radialement externe (12) des évidements inclinés (8) respectifs de chaque barrière de flux (9, 10, 11); **caractérisé en ce que** les huit pôles magnétiques sont divisés en quatre pôles magnétiques primaires (13) et quatre pôles magnétiques secondaires (14) et
- les quatre pôles magnétiques primaires (13) sont composés chacun d'une barrière de flux externe (9) comprenant un angle d'ouverture (θ1) sensiblement égal à 43,1°, d'une barrière de flux centrale (10) comprenant un angle d'ouverture (θ2) sensiblement égal à 33,1° et une barrière de flux interne (11) comprenant un angle d'ouverture (θ3) sensiblement égal à 23,1° et
- les quatre pôles magnétiques secondaires (14) sont composés chacun d'une barrière de flux externe (9) comprenant un angle d'ouverture (θ1) sensiblement égal à 34,4°, d'une barrière de flux centrale (10) comprenant un angle d'ouverture (θ2) sensiblement égal à 24,4° et une barrière de flux interne (11) comprenant un angle d'ouverture (θ3) sensiblement égal à 14,4° et
- chaque pôle secondaire (14) est alterné avec un pôle primaire (13) et
- une différence entre les angles d'ouverture (θ1, θ2, θ3) de chaque barrière de flux (9, 10, 11) respective d'un pôle magnétique primaire (13) à un pôle magnétique secondaire (14) est égale à 8,7°.

2. Machine électrique **caractérisé en ce qu'**elle comprend un stator (15) et un rotor (1) tel que revendiqué précédemment, ledit rotor (1) étant logé à l'intérieur dudit stator (15).

3. Machine électrique selon la revendication précédente **caractérisé en ce que** ledit stator (15) comprend une multiplicité d'encoches (19) radiales disposées circonférentiellement le long dudit stator (15).

4. Machine électrique selon la revendication précédente, **caractérisée en ce que** les encoches (19) s'étendent axialement le long du stator (15).

5. Machine électrique selon l'une des revendications 2 à 4, **caractérisée en ce que** le stator (15) a un diamètre extérieur compris entre 100 et 300 mm et est de préférence égal à 200 mm et un diamètre intérieur compris entre 100 et 200 mm et est de préférence égal à 135 mm.

6. Machine électrique selon l'une des revendications 2 à 4, **caractérisée en ce qu'**elle comprend un entrefer (18) dont la longueur est comprise entre 0.4 mm et 0.8 mm et est de préférence égale à 0.6 mm.

## Patentansprüche

1. Rotor (1) für elektrische Maschine, der Rotor (1) umfasst:
- einem Rotorkörper (1), gebildet aus einem Blechstapel (3), aufgesetzt auf einer Rotorwelle (1) und
- acht Magnetpole, wobei jeder Magnetpol aus mindestens drei Magneten (7) besteht, die in axialen Aussparungen (6) angeordnet sind und
- drei asymmetrische Flussbarrieren, die jeden Magnetpol bilden, einschließlich einer äußeren Flussbarriere (9), einer zentralen Flussbarriere (10) und einer inneren Flussbarriere (11), jede Flussbarriere (9, 10, 11) besteht aus zwei geneigten Aussparungen (8), die beidseits jeder axialen Aussparung (6) angeordnet sind, die beiden geneigten Aussparungen (8) bilden zwischen sich einen Öffnungswinkel (Θ1, Θ2, Θ3), der dem Winkel zwischen zwei Geraden (Δ1, Δ2) entspricht jeweils durch die Mitte C des Rotors (1) und durch einen Mittelpunkt (M), der an einer radial äußeren Fläche (12) der jeweiligen geneigten Vertiefungen (8) jedes Sperrstroms (9, 10, 11) positioniert ist;
**dadurch gekennzeichnet, dass**
- die acht Magnetpole in vier primäre Magnetpole (13) und vier sekundäre Magnetpole (14) unterteilt sind und
- die vier primären Magnetpole (13) bestehen jeweils aus einer äußeren Flussbarriere (9) mit einem Öffnungswinkel (Θ1) im Wesentlichen gleich 43,1°, aus einer zentralen Flussbarriere (10) mit einem Öffnungswinkel (Θ2) im Wesentlichen gleich bis 33,1° und eine innere Strömungsbarriere (11) mit einem Öffnungswinkel (Θ3) im Wesentlichen gleich 23,1° und
- die vier sekundären Magnetpole (14) bestehen jeweils aus einer äußeren Flussbarriere (9) mit einem Öffnungswinkel (Θ1) im Wesentlichen gleich 34,4°, aus einer zentralen Flussbarriere (10) mit einem Öffnungswinkel (Θ2) im Wesentlichen gleich bis 24,4° und eine interne Strömungsbarriere (11) mit einem Öffnungswinkel (Θ3) im Wesentlichen gleich 14,4° und
- jeder Sekundärpol (14) mit einem Primärpol (13) abgewechselt wird und
- eine Differenz zwischen den Öffnungswinkeln (Θ1, Θ2, Θ3) jeder jeweiligen Flussbarriere (9, 10, 11) von einem primären Magnetpol (13) zu einem sekundären Magnetpol (14) gleich 8,7° ist.

2. Elektrische Maschine, **dadurch gekennzeichnet, dass** sie einen Stator (15) und einen Rotor (1) wie oben beansprucht umfasst, wobei der Rotor (1) innerhalb des Stators (15) untergebracht ist.

3. Elektrische Maschine nach dem vorhergehenden Anspruch, **dadurch gekennzeichnet, dass** der Stator (15) eine Vielzahl von radialen Kerben (19) umfasst, die in Umfangsrichtung entlang des Stators (15) angeordnet sind.

4. Elektrische Maschine nach dem vorhergehenden Anspruch, **dadurch gekennzeichnet, dass** sich die Kerben (19) axial entlang des Stators (15) erstrecken.

5. Elektrische Maschine nach einem der Ansprüche 2 bis 4, **dadurch gekennzeichnet, dass** der Stator (15) einen Außendurchmesser zwischen 100 und 300 mm und vorzugsweise gleich 200 mm und einen Innendurchmesser zwischen 100 und 200 mm hat und ist vorzugsweise gleich 135 mm.

6. Elektrische Maschine nach einem der Ansprüche 2 bis 4, **dadurch gekennzeichnet, dass** sie einen Luftspalt (18) aufweist, dessen Länge zwischen 0,4 mm und 0,8 mm beträgt und vorzugsweise gleich 0,6 mm beträgt.

## Claims

1. Rotor (1) for electric machine, the rotor (1) includes:
- a rotor body (1), formed by a stack of sheets (3), placed on a rotor shaft (1) and
- eight magnetic poles, each magnetic pole is composed of at least three magnets (7) positioned in axial recesses (6) and
- three asymmetric flux barriers which make up each magnetic pole including an external flux barrier (9), a central flux barrier (10) and an internal flux barrier (11), each flux barrier (9, 10, 1 1) comprises two inclined recesses (8) positioned on either side of each axial recess (6), the two inclined recesses (8) form between them an opening angle (Θ1, Θ2, Θ3) which corresponds to the angle between two straight lines (Δ1, Δ2) each passing through the center C of the rotor (1) and through a midpoint (M) positioned at aradially external face (12) of the respective inclined recesses (8) of each barrier stream (9, 10, 11);
**characterized in that**
- the eight magnetic poles are divided into four primary magnetic poles (13) and four secondary magnetic poles (14) and
- the four primary magnetic poles (13) are each composed of an external flux barrier (9) comprising an opening angle (Θ1) substantially equal to 43.1°, of a central flux barrier (10) comprising an angle opening (Θ2) substantially equal to 33.1° and an internal flow barrier (1 1) comprising an opening angle (Θ3) substantially equal to 23.1° and
- the four secondary magnetic poles (14) are each composed of an external flux barrier (9) comprising an opening angle (Θ1) substantially equal to 34.4°, of a central flux barrier (10) comprising an angle opening (Θ2) substantially equal to 24.4° and an internal flow barrier (11) comprising an opening angle (Θ3) substantially equal to 14.4° and
- each secondary pole (14) is alternated with a primary pole (13) and
- a difference between the opening angles (Θ1, Θ2, Θ3) of each respective flux barrier (9, 10, 1 1) from a primary magnetic pole (13) to a secondary magnetic pole (14) is equal to 8.7°.

2. Electric machine **characterized in that** it comprises a stator (15) and a rotor (1) as claimed above, said rotor (1) being housed inside said stator (15).

3. Electric machine according to the preceding claim, **characterized in that** said stator (15) comprises a multiplicity of radial notches (19) disposed circumferentially along said stator (15).

4. Electric machine according to the preceding claim, **characterized in that** the notches (19) extend axially along the stator (15).

5. Electric machine according to one of claims 2 to 4, **characterized in that** the stator (15) has an outer diameter of between 100 and 300 mm and is preferably equal to 200 mm and an inner diameter of between 100 and 200 mm and is preferably equal to 135 mm.

6. Electric machine according to one of claims 2 to 4, **characterized in that** it comprises an air gap (18) the length of which is between 0.4 mm and 0.8 mm and is preferably equal to 0.6 mm.
